# EUROPÄISCHE PATENTSCHRIFT

(11) **EP 0 645 571 B1**
(45) Veröffentlichungstag und Bekanntmachung des Hinweises auf die Patenterteilung: **19.03.1997**
(21) Anmeldenummer: 94113121.1
(22) Anmeldetag: 23.08.1994
(51) Int. Cl.: F16L 9/127

(54) **Durch Extrudieren hergestellter Rohrleitungsschuss aus Polyethylen-Kunststoff und Verfahren zur Herstellung**
Extruded pipe end made from polyethylene and method for producing same
Bout de tuyau extrudé en matière polyéthylène et procédé de fabrication

(30) Priorität: 25.09.1993 DE 4332774; 25.09.1993 DE 4332775
(43) Veröffentlichungstag der Anmeldung: 29.03.1995
(73) Patentinhaber: Dipl.-Ing. Dr. Ernst Vogelsang GmbH & Co. KG, D-45699 Herten (DE)
(72) Erfinder: Vogelsang, Horst, D-45699 Herten (DE)
(74) Vertreter: Honke, Manfred, Dr.-Ing.

(56) Entgegenhaltungen:
- EP-A- 0 604 907
- DE-A- 1 604 411
- FR-A- 2 184 857
- FR-A- 2 437 924
- DATABASE WPI Week 8137, Derwent Publications Ltd., London, GB; AN 81-66683D & JP-A-56 092 023

## Beschreibung

Die Erfindung betrifft einen durch Extrudieren hergestellten Rohrleitungsschuß aus Polyethylen-Kunststoff, der zumindest eine angeformte Einsteckmuffe aufweist. Die Erfindung betrifft auch ein Verfahren zur Herstellung eines solchen Rohrleitungsschusses. - Die Wand des Rohrleitungsschusses kann aus einer Schicht bestehen, sie kann aber auch im Wege der Coextrusion mehrschichtig aufgebaut sein. Vorzugsweise handelt es sich um einen Rohrleitungsschuß aus einem einheitlichen Polyethylen-Kunststoff, wenn dieser auch, über die Länge des Rohrleitungsschusses bzw. über den Umfang verteilt, unterschiedliche Mikrostrukturen aufweist. Die im Rahmen der Erfindung eingesetzten Polyethylen-Kunststoffe sind die für Rohrleitungen, insbesondere für erdverlegte Rohrleitungen, üblichen Polyethylen-Kunststoffe. Polyethylen-Kunststoffe bestehen aus vielen ungeordneten langen Ketten, die durch Verbindung von C-Atomen und CH₂-Gruppen gebildet sind. Die Ketten können linear oder auch verzweigt aneinandergereiht sein. Sie werden auch als Makromoleküle bezeichnet. Zwischen den Ketten sind schwache intermolekulare Bindungskräfte wirksam, welche die Materialeigenschaften bestimmen. Es versteht sich, daß diese Bindungskräfte besonders ausgeprägt sind, wenn einzelne Kettenstücke im Polyethylen-Verband sich sehr nahe kommen. Geordnete Bezirke dieser Art, in denen Ketten bündelartig zusammenlaufen, werden im Gegensatz zu dem sie umgebenden ungeordneten Bereich als Kristallite bezeichnet. Der ungeordnete Bereich wird auch als amorpher Bereich bezeichnet. Es versteht sich, daß außer den bereits beschriebenen Bindungskräften auch andere wirksam sein können, wozu eine mehr oder weniger ausgeprägte Vernetzung gehören kann. Bei sehr tiefen Temperaturen sind alle Teile der Makromoleküle gleichsam eingefroren. Durch Zufuhr thermischer Energie werden zuerst die leichter, später die schwerer beweglichen Moleküle zu Bewegungsvorgängen angeregt. Der Aggregatzustand der Kunststoffe ändert sich bei einer solchen Erwärmung zunächst kaum. Oberhalb einer bestimmten Temperatur wird jedoch die Bewegungsenergie der Makromoleküle so groß, daß der Kunststoff zu erweichen beginnt. Er geht von einem festen in einen weicheren Zustand über, der als viskoelastischer Zustand bezeichnet wird. Im viskoelastischen Zustand ist der Zusammenhalt der Makromoleküle untereinander zwar bereits sehr gelockert, aber noch nicht vollständig aufgehoben. Wird die Temperatur weiter erhöht, so geht der viskoelastische Zustand in ein viskoses Fließen über. Wegen der Kristallite, die sich durch das vorstehend angedeutete Bündelungsphänomen bilden, kommt zu dem Erweichungsbereich noch der bei höheren Temperaturen liegenden Schmelzbereich der Kristallite hinzu. Die Kristallite werden zunächst noch oberhalb des Erweichungsbereiches der amorphen Anteile zusammengehalten. Die Anzahl oder Häufigkeit der Kristallite in der Volumeneinheit bestimmt die Festigkeit. Polyethylen-Kunststoffe, die grundsätzlich in der beschriebenen Weise aufgebaut sind, zeigen wegen des beschriebenen Aufbaus und der damit zusammenhängenden Thermodynamik einen sogenannten Memory-Effekt. Darunter wird ein besonderes Schrumpfungsphänomen verstanden. Polyethylen-Kunststoffe können unterhalb des Schmelzbereiches ihre Form in Abhängigkeit von der Temperatur definiert reversibel ändern. Wenn die Verformung von Polyethylen-Kunststoffen, zum Beispiel durch Recken oder Aufweitung, im viskoelastischen Bereich erfolgt ist und der Zustand durch eine Temperatur eingefroren ist, bei der eine Molekülbewegung praktisch nicht mehr stattfindet, so werden bei nachfolgender Erwärmung die Spannungen abgebaut, der verformte Gegenstand kehrt unter Entwicklung beachtlicher Schrumpfkräfte in seine frühere Abmessung zurück.

Bei den bekannten Rohrleitungsschüssen aus Polyethylen-Kunststoff mit zumindest einer angeformten Einsteckmuffe erfolgt das Anformen der Einsteckmuffe regelmäßig im viskoelastischen oder weitgehend viskoelastischen Zustand. Das kann nach Fertigstellung der Rohrleitungsschüsse mit der angeformten Einsteckmuffe vor dem Gebrauch und im Gebrauch zu störenden Schrumpfungen führen, beispielsweise wenn die Rohrleitungsschüsse mit der angeformten Muffe gelagert werden und dabei Temperatureinflüssen ausgesetzt werden, das kann aber auch im eingebauten oder verlegten Zustand der Rohrleitungsschüsse geschehen. Die darauf beruhenden Maßänderungen stören. Die Störungen sind um so ausgeprägter, je dicker die Wand der Rohrleitungsschüsse ist. Bei Rohrleitungsschüssen mit zumindest einer angeformten Einsteckmuffe, die aus Polyvinylchlorid bestehen, läßt sich ohne Schwierigkeiten erreichen, daß die Wand der Rohrleitungsschüsse eine Wanddicke von über 4 mm, zum Beispiel von etwa 6 mm und mehr aufweisen, ohne daß störende Schrumpfungserscheinungen auftreten. Dabei besitzt die angeformte Einsteckmuffe zumeist auch die gleiche Wanddicke wie der Rohrleitungsschuß selbst, weil ein Stauchen der Muffe in axialer Richtung zum Zwecke der Vergrößerung der zunächst durch das Anformen der Einsteckmuffe reduzierten Wanddicke durchgeführt wird. Bei Rohrleitungsschüssen mit zumindest einer angeformten Einsteckmuffe, die aus einem Polyethylen-Kunststoff bestehen und eine große Wanddicke aufweisen, gelingt dieses ohne störende Schrumpfungserscheinungen nicht.

Bei dem aus FR-A-2 184 857 bekannten Verfahren wird ein Ende eines aus nicht- oder teilorientiertem Polymer bestehenden Rohres in eine Form eingeführt, zur Orientierung der Polymermoleküle erwärmt, durch Druck expandierend geformt und durch Kühlen verfestigt, worauf der Druck zurückgenommen wird. Als Polymer kann z.B. Polyvinylchlorid, aber auch Hoch- oder Niederdruckpolyethylen eingesetzt werden.

Der Erfindung liegt das technische Problem zugrunde, einen durch Extrudieren hergestellten Rohrleitungsschuß mit angeformter Einsteckmuffe aus einem Polyethylen-Kunststoff anzugeben, dessen Einsteckmuffe bei Wiedererwärmungen, die vor dem Gebrauch oder im Gebrauch auftreten, störende Schrumpfungen nicht erfährt. Der Erfindung liegt fernerhin die Aufgabe zugrunde, ein Verfahren zur Herstellung solcher Rohrleitungsschüsse anzugeben.

Das technische Problem wird gelöst durch einen durch Extrudieren hergestellten Rohrleitungsschuß aus Polyethylen-Kunststoff, der eine angeformte Einsteckmuffe aufweist, mit den Merkmalen
a) der extrusionsgeformte Rohrleitungsschuß weist eine Wanddicke von über 5 mm (in Worten: fünf) auf,
b) die angeformte Einsteckmuffe weist zumindest die gleiche Wanddicke auf,
und mit der Maßgabe, daß die Wand der Einsteckmuffe im Querschnitt einen hochkristallitischen Innenbereich und einen schwachkristallitischen Außenbereich aufweist, und mit der weiteren

Maßgabe, daß der hochkristallitische Innenbereich ein umlaufendes kristallitisches Stützgewölbe bildet und dieses zur praktisch verformungsfreien Abstützung des schwachkristallitischen Außenbereiches bei auftretenden Schrumpfspannungen im schwachkristallitischen Außenbereich ausgelegt ist. Besonders stabile Verhältnisse in bezug auf die Vermeidung von störenden Schrumpfungsphänomenen erreicht man nach bevorzugter Ausführungsform der Erfindung durch die weitere Maßgabe, daß die Wand der Einsteckmuffe eine Stauchtextur aufweist. Im Rahmen der Erfindung kann die Wand des Rohrleitungsschusses und der Einsteckmuffe eine Wanddicke von über 6 mm aufweisen. Aber auch bei Rohrleitungsschüssen, bei denen die Wand eine Wanddicke von über 10 mm aufweist, haben sich die erfindungsgemäßen Maßnahmen bewährt. Eine bevorzugte Ausführungsform der Erfindung betrifft einen Rohrleitungsschuß des beschriebenen grundsätzlichen Aufbaus, bei dem die Einsteckmuffe zumindest einen Bereich mit eingeformter, umlaufender Aufnahmenut für einen eingelegten Dichtungsring und eine Abdichtungskammer aufweist, wobei auch dieser Bereich in der schon beschriebenen Art und Weise im hochkristallitischen Innenbereich als Stützgewölbe ausgeführt ist.

Gegenstand der Erfindung ist außerdem ein Verfahren zur Herstellung eines eine angeformte Einsteckmuffe aufweisenden extrusionsgeformten Rohrleitungsschusses aus einem Polyethylen-Kunststoff mit den folgenden Verfahrensschritten:
a) Der Rohrleitungsschuß wird an dem Ende, an welches die Einsteckmuffe anzuformen ist, in den Erweichungsbereich erwärmt,
b) das in den Erweichungsbereich erwärmte Ende das Rohrleitungsschusses wird in eine Rohrmuffenform eingeführt, die einen beheizten Dorn aufweist und außen unbeheizt oder gekühlt ist,
c) dabei oder danach wird das erwärmte eingeführte Ende pneumatisch, hydraulisch und/oder mechanisch expandierend in Richtung der Formrauminnenwand der Rohrmuffenform gepreßt, wobei eine Reduzierung der Wanddicke des Rohrleitungsschusses im Einsteckmuffenbereich in Kauf genommen wird,
d) das auf die Muffenweite expandierte Ende des Rohrleitungsschusses wird von der Muffenmündung her unter Vergrößerung der gemäß Verfahrensschritt c) reduzierten Wanddicke auf die durch die Rohrmuffenform vorgegebene Muffengeometrie gestaucht und dadurch sowie dabei gegen die unbeheizte oder gekühlte Formrauminnenwand der Rohrmuffenform gepreßt,
e) die Temperatur des geheizten Dornes wird unter Berücksichtigung der Außentemperatur der Rohrmuffenform so gewählt, daß sich in einem inneren Querschnittsbereich der Einsteckmuffenwand eine Temperatur im Schmelzbereich des Endes des Rohrleintungsschusses einstellt, die zu einer Temperatur in dessen Erweichungsbereich an der Außenwand der Rohrmuffenform abfällt,
wobei die Haltezeit der so an geformten Einsteckmuffe in der Rohrmuffenform sowie die Abkühlgeschwindigkeit der angeformten Einsteckmuffe innerhalb oder außerhalb der Rohrmuffenform so gewählt werden, daß sich ein hochkristallitischer Innenquerschnittsbereich und ein schwachkristallitischer äußerer Querschnittsbereich ausbilden und der innere Querschnittsbereich eine umlaufendes kristallitisches Stützgewölbe bildet und dieses zur praktisch verformungsfreien Abstützung des schwachkristallitischen Außenbereiches bei auftretenden Schrumpfspannungen ausgelegt wird. Bei dem erfindungsgemäßen Verfahren kann von Rohrleitungsschüssen ausgegangen werden, die nach der Extrusion und der üblichen Kalibrierung zunächst abgekühlt und gelagert sind. Eine bevorzugte Ausführungsform der Erfindung, die es erlaubt, im Rahmen des erfindungsgemäßen Verfahrens mit sehr kurzen Zeiten für das Anformen der Einsteckmuffen zu arbeiten, ist dadurch gekennzeichnet, daß nach der Extrusion und Kalibrierung das noch Extrusionsrestwärme aufweisende Ende des Rohrleitungsschusses, gegebenenfalls nach Zwischenerwärmung, in die Rohrmuffenform eingeführt wird. Diese Verfahrensweise erlaubt es, bei der Herstellung der Rohrleitungsschüsse mit sehr kurzen Taktzeiten zu arbeiten.

Die zahlenmäßigen Parameter, die im Rahmen des erfindungsgemäßen Verfahrens beachtet werden müssen, lassen sich leicht durch Versuche ermitteln. Handelt es sich um die gebräuchlichen Polyethylen-Kunststoffe, so kommt man regelmäßig zu sehr guten Ergebnissen, wenn durch die Temperatur des geheizten Dornes muffeninnenseitig eine Temperatur von größer als 125 °C und muffenaußenseitig eine Temperatur von beachtlich unter 125 °C aufrechterhalten wird. Die Haltezeit der geformten Einsteckmuffe in der Rohrmuffenform soll dabei in Minuten etwa der halben Wanddicke der ausgeformten Einsteckmuffe in Millimetern entsprechen. Diese Regel gilt bis zu Wanddicken von etwa 10 mm. Bei größeren Wanddicken kann die Haltezeit kleiner sein, als es dieser Regel entspricht. Im Rahmen des erfindungsgemäßen Verfahrens kann die Wanddicke des Rohrleitungsschusses und damit die der angeformten Muffe zum Beispiel 4 mm betragen. Besonders geeignet ist das erfindungsgemäße Verfahren jedoch für die Herstellung von Rohrleitungsschüssen mit angeformter, praktisch schrumpfungsfreier Einsteckmuffe, die eine Wanddicke von 6 mm, 8 mm und 10 mm aufweisen.

Die Erfindung geht von der Erkenntnis aus, daß durch geeignete Temperaturführung beim expandierenden Anformen einer Einsteckmuffe an einen zuvor durch Extrudieren hergestellten Rohrleitungsschuß aus Polyethylen-Kunststoff sowie durch eine geeignete Temperaturführung bei der Abkühlung nach dem Anformen der Einsteckmuffe das beschriebene Stützgewölbe erzeugt werden kann, welches überraschenderweise durch die beschriebenen Maßnahmen so eingerichtet werden kann, daß durch nachträgliche Schrumpfungsphänomene eine störende Veränderung der Maße der angeformten Einsteckmuffe nicht mehr eintritt. Die für die Ausbildung des Stützgewölbes erforderlichen Maßnahmen lassen sich experimentell ohne Schwierigkeiten ermitteln, wobei die zahlenmäßigen Parameter nach Maßgabe der Durchmesser, der Wanddicke aber auch der besonderen, eingesetzten Polyethylen-Kunststoffe unterschiedlich sind.

Im folgenden wird die Erfindung anhand einer lediglich ein Ausführungsbeispiel darstellenden Zeichnung ausführlicher erläutert. Es zeigen in schematischer Darstellung
- Fig. 1: einen erfindungsgemäßen Rohrleitungsschuß mit angeformter Einsteckmuffe im Längsschnitt und ausschnittsweise,
- Fig. 2: in gegenüber der Fig. 1 wesentlich vergrößertem Maßstab den Ausschnitt A aus dem Gegenstand der Fig. 1 und
- Fig. 3: im Maßstab der Fig. 2 einen Querschnitt B-B durch den Gegenstand der Fig. 1, ebenfalls ausschnittsweise.

Der in den Figuren dargestellte Rohrleitungsschuß 1 wurde durch Extrudieren hergestellt und besteht aus einem Polyethylen-Kunststoff. Er besitzt eine im Sinne der einleitenden Definition einschichtige oder mehrschichtige Wand 2, die durch Monoextrusion bzw. Coextrusion hergestellt wurde. Man erkennt die angeformte Einsteckmuffe 3. Die Schichten der mehrschichtigen Ausführungsform wurden nicht angedeutet.

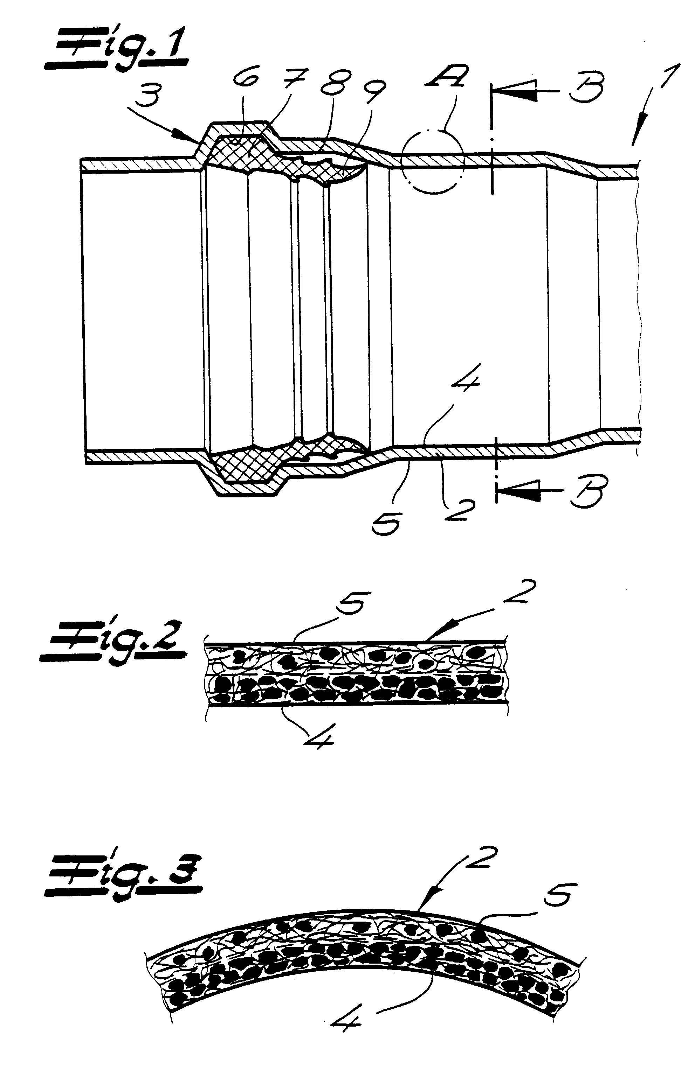

Der extrusionsgeformte Rohrleitungsschuß 1 weist eine Wanddicke von über 5 mm auf. Die angeformte Einsteckmuffe 3 weist zumindest die gleiche Wanddicke auf. Aus einer vergleichenden Betrachtung der Fig. 1 bis 3 und insbesondere aus der Fig. 3 entnimmt man, daß die Wand 2 im Querschnitt einen hochkristallitischen Innenbereich 4 und einen schwachkristallitischen Außenbereich 5 aufweist. Einer dieser Bereiche oder beide können aus mehreren Schichten bestehen. Hochkristallitisch bezeichnet die Tatsache, daß eine Vielzahl von Kristalliten vorhanden ist, die sich unmittelbar oder mittelbar, wie die Bausteine in einem Gewölbe, gegeneinander abstützen. Schwachkristallitisch bedeutet, daß nur wenige Kristallite sich ausgebildet haben. Man erkennt fernerhin, daß der hochkristallitische Innenbereich ein umlaufendes kristallitisches Stützgewölbe bildet. Dieses ist so ausgelegt, daß eine praktisch verformungsfreie Abstützung des schwachkristallitischen Außenbereiches 5 bei auftretenden mechanischen Schrumpfspannungen in diesem Außenbereich stattfindet.

Die Wand der Einsteckmuffe 3 besitzt im übrigen eine Stauchtextur, weil beim Anformen der Einsteckmuffe 3 nicht nur eine Aufweitung, sondern auch ein Stauchen durchgeführt worden ist. Die Wanddicke mag über 6 mm oder auch über 10 mm liegen. Im Ausführungsbeispiel und nach bevorzugter Ausführungsform der Erfindung besitzt die Einsteckmuffe 3 einen Bereich mit einer eingeformten umlaufenden Aufnahmenut 6 für einen eingelegten Dichtungsring 7 und eine sogenannte Abdichtungskammer 8, an der die Abdichtungslippe 9 des Dichtungsringes 7 anliegt. Auch dieser Bereich des Rohrleitungsschusses 1 und der Einsteckmuffe 3 ist als Stützgewölbe ausgeführt.

Es versteht sich, daß der beschriebene einschichtige oder mehrschichtige Rohrleitungsschuß 1 mit der angeformten Einsteckmuffe 3 auch den gleichsam tragenden Kern eines Rohrleitungsschusses bilden kann, der im Wege der Coextrusion mit einer zusätzlichen äußeren Kunststoffschicht oder Beschichtung anderer Funktion versehen sein kann.

## Patentansprüche

1. Durch Extrudieren hergestellter Rohrleitungsschuß (1) aus Polyethylen-Kunststoff, der eine angeformte Einsteckmuffe (3) aufweist, mit den Merkmalen
a) der extrusionsgeformte Rohrleitungsschuß (1) weist eine Wanddicke von über 5 mm auf,
b) die angeformte Einsteckmuffe (3) weist zumindest die gleiche Wanddicke auf,
und mit der Maßgabe, daß die Wand (2) der Einsteckmuffe (3) im Querschnitt einen hochkristallitischen Innenbereich (4) und einen schwachkristallitischen Außenbereich (5) aufweist, und mit der weiteren Maßgabe, daß der hochkristallitische Innenbereich (4) ein umlaufendes kristallitisches Stützgewölbe bildet und dieses zur praktisch verformungsfreien Abstützung des schwachkristallitischen Außenbereiches (5) bei auftretenden Schrumpfspannungen ausgelegt ist.

2. Rohrleitungsschuß nach Anspruch 1 mit der weiteren Maßgabe, daß die Wand (2) der Einsteckmuffe (3) eine Stauchtextur aufweist.

3. Rohrleitungsschuß nach einem der Ansprüche 1 oder 2, bei dem die Wand (2) eine Wanddicke von über 6 mm aufweist.

4. Rohrleitungsschuß nach einem der Ansprüche 1 oder 2, bei dem die Wand (2) eine Wanddicke von über 10 mm aufweist.

5. Rohrleitungsschuß nach einem der Ansprüche 1 bis 4, bei dem die Einsteckmuffe (3) zumindest einen Bereich mit eingeformter umlaufender Aufnahmenut (6) für einen eingelegten Dichtungsring (7) und eine Abdichtungskammer (8) aufweist und auch dieser Bereich als Stützgewölbe ausgeführt ist.

6. Verfahren zur Herstellung eines eine angeformte Einsteckmuffe aufweisenden Rohrleitungsschusses nach einem der Ansprüche 1 bis 5 mit den Verfahrensschritten:
a) Der Rohrleitungsschuß wird an dem Ende, an welches die Einsteckmuffe anzuformen ist, in den Erweichungsbereich erwärmt,
b) das in den Erweichungsbereich erwärmte Ende des Rohrleintungsschusses wird in eine Rohrmuffenform eingeführt, die einen beheizten Dorn aufweist und außen unbeheizt oder gekühlt ist,
c) dabei oder danach wird das erwärmte eingeführte Ende pneumatisch, hydraulisch und/oder mechanisch expandierend in Richtung der Formrauminnenwand der Rohrmuffenform gepreßt, wobei eine Reduzierung der Wanddicke des Rohrleitungsschusses im Einsteckmuffenbereich in Kauf genommen wird,
d) das auf die Muffenweite expandierte Ende des Rohrleitungsschusses wird von der Muffenmündung her unter Vergrößerung der gemäß Verfahrensschritt c) reduzierten Wanddicke auf die durch die Rohrmuffenform vorgegebene Muffengeometrie gestaucht und dadurch sowie dabei gegen die unbeheizte oder gekühlte Formrauminnenwand der Rohrmuffenform gepreßt,
e) die Temperatur des geheizten Dornes wird unter Berücksichtigung der Außentemperatur der Rohrmuffenform so gewählt, daß sich in einem inneren Querschnittsbereich der Einsteckmuffenwand eine Temperatur im Schmelzbereich des Endes des Rohrleitungsschusses einstellt, die zu einer Temperatur in dessen Erweichungsbereich an der Außenwand der Rohrmuffenform abfällt,
wobei die Haltezeit der so an geformten Einsteckmuffe in der Rohrmuffenform sowie die Abkühlgeschwindigkeit der angeformten Einsteckmuffe innerhalb oder außerhalb der Rohrmuffenform so gewählt werden, daß sich ein hochkristallitischer Innenquerschnittsbereich und ein schwachkristallitischer äußerer Querschnittsbereich ausbilden und der innere Querschnittsbereich ein umlaufendes kristallitisches Stützgewölbe bildet, welches zur praktisch verformungsfreien Abstützung des schwachkristallinen Außenbereiches bei auftretenden mechanischen Schrumpfspannungen ausgelegt wird.

7. Verfahren nach Anspruch 6, wobei ein nach Extrusion und Kalibrierung abgekühlter Rohrleitungsschuß an dem Ende, an welches die Einsteckmuffe anzuformen ist, in den Erweichungsbereich erwärmt wird.

8. Verfahren nach Anspruch 6, wobei ein nach Extrusion und Kalibrierung noch Extrusionsrestwärme aufweisendes Ende des Rohrleitungsschusses, gegebenenfalls nach Zwischenerwärmung, in die Rohrmuffenform eingeführt wird.

9. Verfahren nach einem der Ansprüche 6 bis 8, wobei durch die Temperatur des geheizten Dornes muffeninnenseitig eine Temperatur größer als 125 °C und muffenaußenseitig eine Temperatur von beachtlich unter 125 °C aufrechterhalten wird.

10. Verfahren nach einem der Ansprüche 6 bis 9, wobei die Haltezeit der geformten Einsteckmuffe in der Rohrmuffenform in Minuten etwa der halben Wanddicke der ausgeformten Einsteckmuffe in Millimetern entspricht.

## Claims

1. A pipeline end (1) produced from synthetic polyethylene material by extrusion, which comprises an integrally formed insertion socket (3), with the features
a) the pipeline end (1) formed by extrusion has a wall thickness greater than 5 mm,
b) the integrally formed insertion socket (3) has at least the same wall thickness,
and with the proviso that the wall (2) of the insertion socket (3), in cross-section, has a highly crystalline inner region (4) and a slightly crystalline outer region (5), and with the further proviso that the highly crystalline inner region (4) forms an encircling crystalline supporting arch and the latter is designed for supporting the slightly crystalline outer region (5) practically free from deformation when shrinkage stresses occur.

2. A pipeline end according to claim 1, with the further proviso that the wall (2) of the insertion socket (3) has an upset texture.

3. A pipeline end according to either one of claims 1 or 2, wherein the wall (2) has a wall thickness greater than 6 mm.

4. A pipeline end according to either one of claims 1 or 2, wherein the wall (2) has a wall thickness greater than 10 mm.

5. A pipeline end according to any one of claims 1 to 4, wherein the insertion socket (3) comprises at least one region having an integrally formed seating groove (6) for an inserted sealing ring (7) and having a sealing chamber (8), and this region is also designed as a supporting arch.

6. A process for producing a pipeline end comprising an integrally formed insertion socket according to any one of claims 1 to 5, with the process steps:
a) the pipeline end is heated to within its softening range at the end at which the insertion socket is to be integrally formed,
b) the end of the pipeline end which is heated to within its softening range is introduced into a pipe socket mould which comprises a heated mandrel and is unheated or cooled on the outside,
c) simultaneously or thereafter, the heated introduced end is pneumatically, hydraulically and/or mechanically pressed so as to expand towards the inner wall of the mould cavity of the pipe socket mould, wherein a reduction in the wall thickness of the pipeline end is accepted in the region of the insertion socket,
d) the end of the pipeline end which has expanded to the width of the socket is upset from the socket mouth, with an increase in the wall thickness which was reduced according to process step c), to produce the socket geometry which is predetermined by the pipe socket mould, and is thereby, and at the same time, pressed against the unheated or cooled inner wall of the mould cavity of the pipe socket mould,
e) the temperature of the heated mandrel is selected, taking into consideration the outside temperature of the pipe socket mould, so that a temperature of the end of the pipeline end which is within the melting range is reached in an inner cross-sectional region of the insertion socket wall, which temperature drops to a temperature of the end of the pipeline end which is within the softening range at the outer wall of the pipe socket mould,
wherein the holding time in the pipe socket mould of the insertion socket which is integrally formed in this manner, as well as the cooling rate of the integrally formed insertion socket inside or outside the pipe socket mould, are selected so that a highly crystalline inner cross-sectional region and a slightly crystalline outer cross-sectional region are formed and the inner cross-sectional region forms an encircling supporting arch which is designed for supporting the slightly crystalline outer region practically free from deformation when mechanical shrinkage stresses occur.

7. A process according to claim 6, wherein a pipeline end, which is cooled after extrusion and sizing, is heated to within its softening range at the end at which the insertion socket is to be integrally formed.

8. A process according to claim 6, wherein an end of the pipeline, which still contains residual heat from extrusion after extrusion and sizing, is introduced into the pipe socket mould, optionally after intermediate heating.

9. A process according to any one of claims 6 to 8, wherein a temperature higher than 125°C is maintained on the inside ofthe socket and a temperature appreciably below 125°C is maintained on the outside of the socket, due to the temperature of the heated mandrel.

10. A process according to any one of claims 6 to 9, wherein the holding time in minutes ofthe moulded insertion socket in the pipe socket mould approximately corresponds to half the wall thickness of the integrally formed insertion socket in millimetres.

## Revendications

1. Elément de tuyau (1) extrudé en polyéthylène pourvu d'un embout mâle (3) surmoulé, avec les particularités suivantes :
a) l'élément de tuyau extrudé (1) présente une épaisseur de paroi de plus de 5 mm,
b) l'embout mâle (3) surmoulé présente au moins la même épaisseur de paroi,
et avec la caractéristique selon laquelle la section transversale de la paroi (2) de l'embout mâle (3) présente une partie intérieure (4) hautement cristallitique et une partie extérieure (5) faiblement cristallitique, et avec la caractéristique supplémentaire selon laquelle la partie intérieure (4) hautement cristallitique forme une voûte d'appui et que celle-ci est conçue pour soutenir pratiquement sans déformation la partie extérieure (5) faiblement cristallitique lors de l'apparition de contraintes de retrait.

2. Elément de tuyau selon la revendication 1, avec la caractéristique supplémentaire selon laquelle la paroi (2) de l'embout mâle (3) présente une texture écrasée.

3. Elément de tuyau selon la revendication 1 ou 2, dans lequel la paroi (2) présente une épaisseur de plus de 6 mm.

4. Elément de tuyau selon la revendication 1 ou 2, dans lequel la paroi (2) présente une épaisseur de plus de 10 mm.

5. Elément de tuyau selon l'une des revendications 1 à 4, dans lequel l'embout mâle (3) présente au moins une section avec une rainure de réception circulaire (6) moulée pour un joint d'étanchéité (7) inséré et une chambre d'étanchéité (8), cette section étant conformée en voûte d'appui.

6. Procédé de fabrication d'un élément de tuyau pourvu d'un embout mâle surmoulé selon l'une des revendications 1 à 5, comprenant les étapes de procédé suivantes :
a) L'élément de tuyau est chauffé à la température de ramollissement à l'extrémité sur laquelle doit être surmoulé l'embout mâle,
b) l'extrémité de l'élément de tuyau portée à la température de ramollissement est introduite dans un moule d'embout de tuyau comportant un mandrin chauffé, et non chauffé ou refroidi extérieurement,
c) pendant ou après cette opération, l'extrémité chauffée introduite est pressée pneumatiquement, hydrauliquement et/ou mécaniquement, avec expansion, en direction de la paroi intérieure du moule d'embout de tuyau, en tenant compte d'une réduction de l'épaisseur de paroi de l'élément de tuyau dans la région de l'embout mâle,
d) l'extrémité de l'élément de tuyau expansée au diamètre de l'embout est refoulée à partir de l'embouchure de l'embout, avec augmentation de l'épaisseur de paroi réduite conformément à l'étape de procédé c), sur la géométrie d'embout imposée par le moule d'embout et pressée de ce fait en même temps contre la paroi intérieure non chauffée ou refroidie du moule d'embout,
e) la température du mandrin chauffé est choisie, en tenant compte de la température extérieure du moule d'embout, de telle façon qu'à l'intérieur d'une partie intérieure de la section transversale de la paroi de l'embout mâle s'établit une température dans le domaine de fusion de l'extrémité de l'élément de tuyau qui descend jusqu'à une température dans le domaine de ramollissement de celui-ci sur la paroi extérieure du moule d'embout,
le temps de maintien de l'embout mâle ainsi surmoulé dans le moule d'embout ainsi que la vitesse de refroidissement de l'embout mâle surmoulé à l'intérieur ou à l'extérieur du moule d'embout étant choisis de telle façon qu'une zone de section transversale intérieure hautement cristallitique et une zone de section transversale extérieure faiblement cristallitique se forment et que la zone de section transversale intérieure constitue une voûte d'appui cristallitique circulaire qui est conçue pour assurer le soutien pratiquement sans déformation de la zone extérieure faiblement cristallitique en cas d'apparition de contraintes de retrait mécaniques.

7. Procédé selon la revendication 6, dans lequel un élément de tuyau refroidi après extrusion et calibrage est porté à la température de ramollissement à l'extrémité sur laquelle doit être surmoulé l'embout mâle.

8. Procédé selon la revendication 6, dans lequel une extrémité de l'élément de tuyau qui, après extrusion et calibrage, contient encore de la chaleur d'extrusion résiduelle est introduite, éventuellement après un réchauffage intermédiaire, dans le moule d'embout.

9. Procédé selon l'une des revendications 6 à 8, dans lequel la température du mandrin chauffé maintient à l'intérieur de l'embout une température supérieure à 125°C et à l'extérieur de l'embout, une température sensiblement inférieure à 125°C.

10. Procédé selon l'une des revendications 6 à 9, dans lequel le temps de maintien de l'embout mâle moulé dans le moule d'embout en minutes correspond sensiblement à la moitié de l'épaisseur de paroi de l'embout mâle moulé en millimètres.
